Europäisches Patentamt

European Patent Office

Office européen des brevets

(19)

(11) Publication number: **0 336 421**

**A2**

(12)

# EUROPEAN PATENT APPLICATION

(21) Application number: 89106070.9

(51) Int. Cl.⁴: **G02B 6/12**

(22) Date of filing: 06.04.89

(30) Priority: 08.04.88 JP 85154/88

(43) Date of publication of application:
**11.10.89 Bulletin 89/41**

(84) Designated Contracting States:
**DE FR GB**

(71) Applicant: **MITSUBISHI GAS CHEMICAL COMPANY, INC.**
**1-1, Niijuku 6-chome Katsushika-ku Tokyo, 125(JP)**

(72) Inventor: **Arii, Mitsuzo c/o Mitsubishi Gas Chemical Co. Inc.**
**Honsha Kenkyusho 1-1, Niijuku 6-chome Katsushika-ku Tokyo, 125(JP)**
Inventor: **Takeda, Norio c/o Mitsubishi Gas Chemical Co. Inc.**
**Honsha Kenkyusho 1-1, Niijuku 6-chome Katsushika-ku Tokyo, 125(JP)**
Inventor: **Ohwada, Hisashi c/o Mitsubishi Gas Chemical Co.Inc**
**Honsha Kenkyusho 1-1, Niijuku 6-chome Katsushika-ku Tokyo, 125(JP)**
Inventor: **Shibuya, Tomoko c/o Mitsubishi Gas Chemical Co.Inc**
**Honsha Kenkyusho 1-1, Niijuku 6-chome Katsushika-ku Takyo, 125(JP)**

(74) Representative: **Strehl, Schübel-Hopf, Groening, Schulz**
**Maximilianstrasse 54 Postfach 22 14 55 D-8000 München 22(DE)**

(54) Polymer optical waveguide device.

(57) A polymer optical waveguide device is provided, wherein a polymer film having an optical waveguide formed therein is sandwiched between two substrates and secured to the substrates with a bonding agent. At least one of the substrates is a substrate having a groove in the inside in which the polymer film can be inserted, the depth of said groove is adjusted in such a manner that the size of the depth of the groove section defined by the two substrates is larger than the size of the thickness of the polymer film, and the polymer film is sandwiched between the substrates at the groove section and is bonded to the substrates with a bonding agent.

FIG. 1C

## POLYMER OPTICAL WAVEGUIDE DEVICE

### Field of the Invention

The present invention relates to a polymer optical waveguide device used as optical branching coupling devices, optical demultiplexing/multiplexing devices, and optical attenuators in optical information transmitting systems.

### Summary of the Invention

The present invention is directed to a polymer optical waveguide device wherein a polymer film having an optical waveguide formed therein is sandwiched between two substrates, and the polymer optical waveguide device is made to have such a constitution that at least one of the substrates comprises a groove into which the polymer film will be inserted, and the size of the depth of the groove section defined by the two substrates is greater than that of the thickness of the polymer film so that when the polymer film is bonded and secured to the substrates, no direct pressure will be applied to the polymer film, thereby providing a polymer optical waveguide device having low optical loss with good reproducibility.

### Prior Art

As methods of forming an optical waveguide in a polymer film, can be mentioned, for example, "a method of producing an optical circuit" described in Japanese Patent Publication No. 26813/1978, and "a method of producing a polymer lightguide path" described in Japanese Patent Publication No. 3522/1981, wherein after a film uniform in thickness and containing a photopolymerizable monomer is selectively exposed to light to polymerize the monomer, the unreacted monomer is removed to form waveguide in the polymer film.

When such an optical waveguide is used as an optical branching/coupling device, generally the polymer film is sandwiched between substrates so as to prevent the optical waveguide from being damaged by friction or bending.

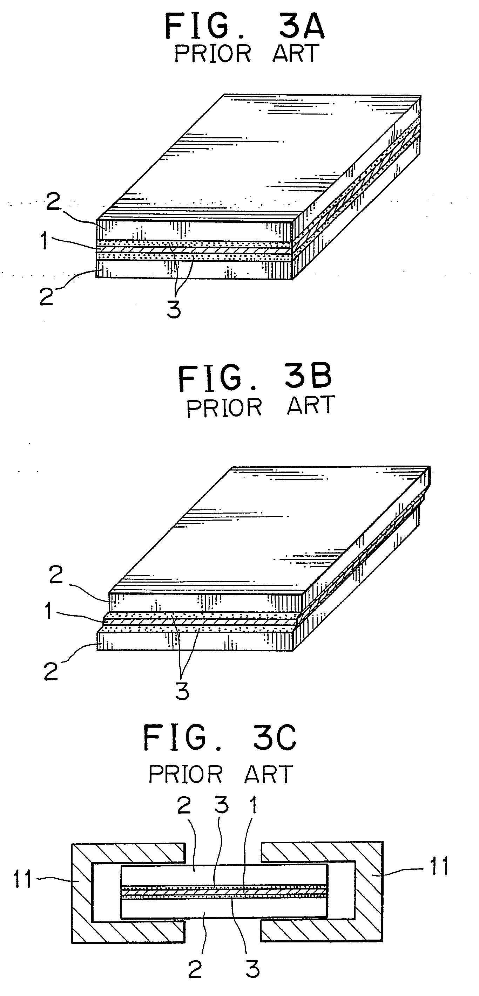

The structure of the prior polymer optical waveguide device is produced generally as shown in Figs. 3A, 3B and 3C by sandwiching a polymer film 1 in which a desired optical waveguide is formed between two planar substrates 2, 2 using bonding agents 3.

Although various commercially available bonding agent products can be used as the bonding agent used for such a purpose, bonding agents whose setting time is short, that is, so-called instantaneous bonding agents such as cyanoacrylate bonding agents were prematurely set during the bonding procedure, so that favorable bonding of the polymer film to the substrates was difficult, and there was such a disadvantage that some bonding agents dissolve the polymer film partially. When bonding agents that have a certain induction period before the setting such as epoxy bonding agents are used, although the procedure becomes easy, the polymer film 1 and the substrates 2, 2 often shift their required positions during the standing for the setting as schematically shown in Fig. 3B when the polymer film is sandwiched between the planar substrates and is bonded.

Therefore, generally when they are pressed by clips 11 or the like as shown in Fig. 3C for holding them until the bonding agent sets, the substrates 2, 2 sandwiching the polymer film 1 can be prevented from shifting, and thus the clips are effective to increase the bonding effect.

However, the thus produced polymer optical waveguide device often showed an unexpectedly high optical loss value or the optical loss value scattered greatly.

The inventors have analyzed the cause of them, and have found that when the substrates 2, 2 are pinched by the clips 11 to press them to bond the polymer film 1 and the substrates 2, 2 with the bonding agents 3, 3, the density of the polymer film 1 is increased, and therefore the relative refractive index difference between the core and the clad constituting the optical waveguide is lowered, leading to a high optical loss value, and since the pressure applied to the polymer film from the clips is not uniform, the optical loss value is scattered.

An optical waveguide consists of a core through which light passes and whose refractive index is higher than that of its surrounding part and a clad surrounding the core and having a lower refractive index, and when light passes through the optical waveguide, the light proceeds while repeatedly undergoing total

2

reflection at the clad section. Therefore, the refractive index difference between the core and the clad plays an important role in the transmission of the light, and if the refractive index difference is not high enough, the light leaks on its way.

Accordingly, in the manufacture of optical waveguides, they are produced by setting the required refractive index difference between the core and the clad so that the loss of the light due to leakage during the transmission of the light might be reduced.

On the other hand, when light enters an optical waveguide via an optical fiber, if the optical waveguide does not have an aperture angle greater than the aperture angle that is determined by the refractive index difference between the core and the clad of the optical fiber itself, the leakage of the light at the joined surfaces of the optical fiber and the optical waveguide will become great. Therefore, the refractive index difference of the optical waveguide is designed and made to be suitable for the optical fiber that will be used.

Even if the refractive index difference is previously designed suitably, when the polymer film is pressed during the manufacture of the optical waveguide as mentioned above thereby lowering relatively the refractive index of the core and the clad, the optical waveguide will show an unexpectedly high optical loss, or the optical loss value will be scattered.

## Subject to be Solved by the Invention

The object of the present invention is to provide a polymer optical waveguide device whose optical loss is low and whose performance scatters little by producing it in such a way that when a polymer film constituting the optical waveguide is sandwiched between two substrates and bonded firmly with a bonding agent to be reinforced, an excessive pressure will not be applied to the polymer film.

## Means of Solving the Subject

The polymer optical waveguide device of the present invention is constructed in such a way that the polymer film in which an optical waveguide is formed is bonded securely to substrates having a groove for bonding securely the polymer film.

## Operation

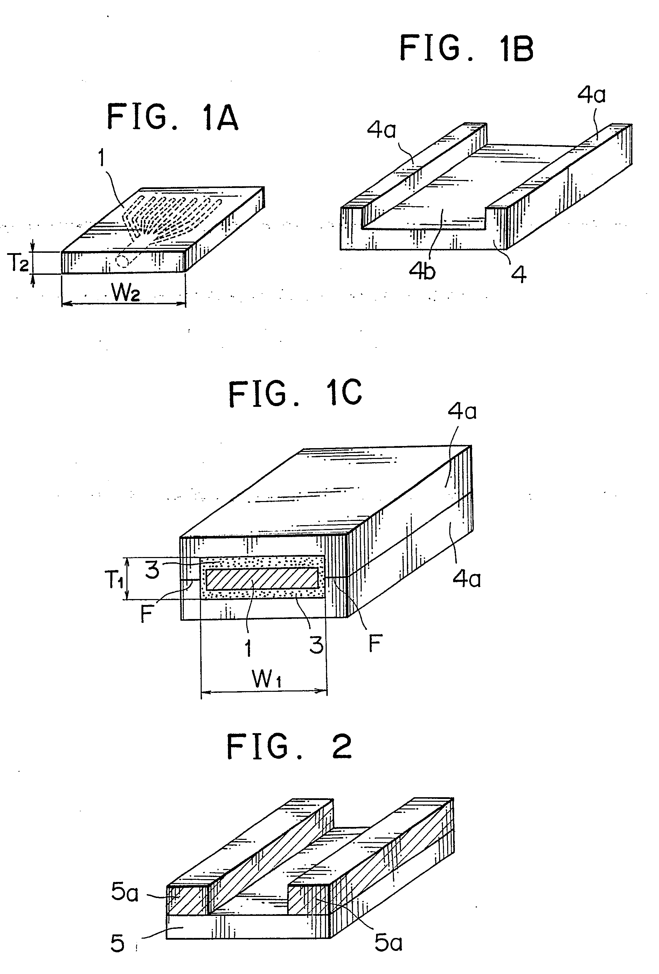

The polymer optical waveguide device of the present invention includes a polymer film in which an optical circuit is formed as shown in Figs. 1A to 1C. The polymer film is sandwiched between two substrates 4 of a relatively tough material and bonding them with a bonding agent. A groove is formed in the inner side of at least one of the substrates, and the depth $T_1$ of the groove section defined between the two substrates with the polymer film placed between them is made greater than the thickness $T_2$ of the polymer film itself, so that when the polymer film is bonded securely to the substrates, an excessive pressure will not be applied to the polymer film. When a polymer optical waveguide device is made in this way, the optical loss can be made low, and the scatter of the performance can be quite reduced.

The polymer film that is placed in the groove section defined between the two substrates and is bonded securely to the substrates can be bonded firmly to the substrates by filling the groove section completely with a bonding agent, and, if required, a pressure is applied from the outside by clips or the like as shown in Fig. 3C to the projected sections 4a where the substrates are bonded directly with the bonding agent, and the whole structure can be made more firm.

The present substrates with the grooves may have various forms other than the structure illustrated in Figs. 1A to 1C. In short, it is enough that if the size of the depth $T_1$ of the groove section defined between the two substrates is greater than that of the thickness $T_2$ of the polymer film, and thus the present invention is not limited to the embodiment shown in Figs. 1A to 1C.

The substrate may be molded to have the groove integrally, or may be constituted in such a manner that two spacers having a suitable thickness are placed on a planar plate at the both ends thereof as shown in Fig. 2.

To attain the above purpose, there is no particular limitation on the difference $\Delta t$ between the depth $T_1$ of the groove section defined by the two substrates and thickness $T_2$ of the polymer film, but if it is too small, the thickness of the bonding agent is limited, and it becomes difficult to bond the substrates and the polymer film effectively. On the other hand, if the Δt is too large, it will be accompanied by such disadvantages that the bonding agent is used in an unrequired amount, and the setting will require a long time.

Therefore, it is appropriate that the Δt is 2 to 300 μm, desirably 5 to 200 μm, and more desirably about 10 to 100 μm.

The substrates are preferably molded bodies of raw materials such as plastics.

There is no particular limitation on the material of the substrate if the purpose can be attained, and for example thermoplastics such as polycarbonate, polymethyl acrylate, polystyrene, polyesters, and polyamides; thermosetting plastics such as unsaturated polyesters, phenolic resin, epoxy resin, and polyimide; glass, metals, and ceramics can be used. Among them, plastic, glass or ceramics is preferred, plastic or glass is more preferred.

To attain the above purpose, although there is no limitation on the physical properties of the substrate, since it is required to align the optical axes when the polymer optical waveguide and an optical fiber are united and the performance of the polymer optical waveguide is assessed, generally it is convenient to carry out it while a leaked beam of visible radiation such as red laser beam from the optical waveguide is monitored to confirm the situation of the transmission of the beam, and therefore it is more practical to use a material good in transmission of the monitoring light. As the material suitable for that purpose can be mentioned visible radiation transmitting (passing) thermoplastic resins, thermosetting resins, glass and transparent ceramics.

In view of the workability, the bonding agent to be desirably used in the present invention is one having a suitable setting speed, and it is not appropriate to use one containing a large amount of a substance that will attack the polymer film. For example, a cyanoacrylate type high-speed bonding agent is too high in setting speed and is inconvenient in view of the workability, and in the case where a bisphenol type polycarbonate is used for the polymer film, the cyanoacrylate type high-speed bonding agent will attack the polymer film. Accordingly, it is required to select the bonding agent taking the material of the polymer film into consideration. When the monitoring of the light mentioned above is taken into consideration, it is desirable to use a bonding agent that is transparent after setting.

For these reasons, it is appropriate to use a bonding agent of epoxy resins such as cold-setting epoxy resins, heat setting epoxy resins; UV-curing resins, or the like, UV-curing resin being most preferred.


Brief Description of the Drawings


Figs. 1A to 1C illustrate an embodiment of the present invention, Fig. 1A is a perspective view of a polymer film, Fig. 1B is a perspective view of a substrate, and Fig. 1C is a perspective view of a polymer optical waveguide device.

Fig. 2 is a perspective view of a substrate used in another embodiment of the present invention.

Figs. 3A, 3B, and 3C show a conventional optical waveguide device, Fig. 3A is a perspective view of a polymer optical waveguide device, Fig. 3B is a perspective view thereof in case of the misaligned state, and Fig. 3C is a sectional view thereof in the bonded state.

The present invention will now be described with reference to the following Examples.


Example 1


Figs. 1A to 1C illustrate one embodiment of the present invention, Fig. 1A is a perspective view of a polymer film wherein 8-branched optical waveguide is formed, Fig. 1B is a perspective view of a substrate, and Fig. 1C is a perspective view of the polymer waveguide device.

The inner surfaces of the substrates 4, 4 were formed with grooves having a depth of 50 μm and a width $W_1$ of 15 mm in the inner surfaces, and the top surfaces of the opposite projected sections 4a, 4a were planar. After applying a bonding agent to the recess 4b of one of the substrates, the polymer film 1 having a thickness $T_2$ of 80 μm and a width $W_2$ of 14 mm was placed thereon, and the top of the polymer film was pressed slightly to spread the bonding agent uniformly. In this manner, the polymer film was temporarily secured to the recess 4b of the substrate with the bonding agent.

Then, the bonding agent was applied on the polymer film, the projected sections 4a, 4a of the other substrate 4 were faced to be held thereon. At that time, the amount of the bonding agent to be applied on the polymer film was to be such that when the substrate 4 was abutted, the bonding agent would be spread onto the contact surfaces F of the projected sections 4a, 4a of the substrates 4, 4.

Thus, the polymer film 1 was secured to the substrates with the bonding agent 3 with the polymer film 1 positioned in the groove section defined between the opposed projected sections 4a, 4a of the two substrates 4, 4.

If necessary, the bonding agent was allowed to set with the outsides of the substrates 4, 4 clamped by clips 11 as shown in Fig. 3C, which permitted the surfaces F where the projected sections 4a, 4a were in contact with each other to be bonded firmly without applying the pressure from the clips to the polymer film.

To measure the properties of the polymer optical waveguide device constructed as above, the opposite ends were precisely polished to expose the input and output sections of the optical waveguide, light from an LED light source of 0.85 μm was fallen from the input side into the optical waveguide through an optical fiber, and the outputted light was received by an optical fiber whose end was connected to a power meter. The results of the excess loss of the optical waveguide obtained from the power ratio of the input light and the output light according to the following formula are shown for Sample Nos. 1 and 2.

$$\text{The excess loss of an optical waveguide} = 10 \log \frac{\text{Iin}}{\Sigma \text{Iout}}$$

As apparent from Table 1, polymer optical waveguide devices having low losses of 1.3 dB and 1.2 dB could be produced with good reproducibility.

Table 1

| Method | Sample No. | Excess loss (dB) |
|---|---|---|
| Example 1 | 1 | 1.3 |
| | 2 | 1.2 |
| Example 2 | 3 | 1.3 |
| | 4 | 1.4 |
| Comparative Example | 5 | 1.9 |
| | 6 | 2.8 |
| | 7 | 2.3 |

Example 2

Fig. 2 is a perspective view of the substrate used in another embodiment of the present invention, and the substrate comprised a planar substrate having a width of 50 mm and a thickness of 3 mm and two spacers 5a, 5a on the both sides of the substrate and forming a groove having a width of 15 mm and a thickness of 100 μm.

After the spacers 5a, 5a were secured to one of the substrates 5, 5 with a bonding agent, a polymer film 1 was bonded securely in the groove with the bonding agent 3 in the same manner as that in Example 1, and the bonding agent was allowed to set with the substrates 5, 5 clamped by clips 11 to produce a polymer optical waveguide device.

The excess loss of the thus constructed polymer optical waveguide devices was measured in the same manner as that in Example 1, and the results are in Table 1. The excess loss of the Sample No. 3 was 1.3 dB, and that of the Sample No. 4 was 1.4 dB, showing that the same effect as that of Example 1 was obtained.

Comparative Example 1

The polymer film 1 was sandwiched between the planar substrates 5, 5 that were the same as those used in Example 2, and the bonding agent 3 was set with the substrates clamped by clips 11 in the same manner as that in Examples 1, and 2 to produce optical waveguide devices.

The excess loss of the polymer optical waveguides constructed as above was measured in the same manner as in Example 1, and the results were such that the excess loss of Sample No. 5, the excess loss of Sample No. 6, and the excess loss of Sample No. 7 were 1.9 dB, 2.8 dB, and 2.3 dB, respectively, showing that the excess loss was high, the scatter was large, and the reproducibility was poor in comparison with Examples 1, and 2.

The present optical waveguide is used as optical branching/coupling devices, etc. in optical communication systems. In optical communication systems, the light loss in the system is a quite important factor, and the distance possible for transmission is determined by the loss properties of the optical fiber itself depending on the type of the optical fiber used. For example, according to the present invention, improvement of the optical loss value of 1 dB or over has been attained in comparison to the conventional manufacturing process. It can be said that this value is equivalent to the effect that the transmission distance of an optical fiber is simply extended by about 1 km in the case of a quartz multi-mode optical fiber used in a short-distance optical communication network such as a local area network.

## Effect

As described above, according to the present invention, reinforcement can be carried out in such a manner an external force is applied on substrates, but is not applied to a polymer film when bonding is effected.

Therefore, since an external force does not act on a polymer film, bonding and securing can be effected without changing the refractive index, and there is such an effect that a polymer optical waveguide device with a low optical loss can be produced with good reproducibility.

## Claims

1. A polymer optical waveguide device wherein a polymer film having an optical waveguide formed therein is sandwiched between two substrates and secured to the substrates with a bonding agent, characterized in that at least one of the substrates is a substrate having a groove in the inside in which the polymer film can be inserted, the depth of said groove is constructed. in such a manner that the size of the depth of a groove section defined by the two substrates is larger than the size of the thickness of the polymer film, and the polymer film is sandwiched between the substrates at the groove section and is bonded to the substrates with a bonding agent.

2. A device according to Claim 1, wherein the substrates are the ones through which visible radiation can pass.

3. A device according to Claim 1 or 2, wherein the substrates are molded bodies of plastic, glass or ceramics.

4. A device according to Claim 1 or 2, wherein the substrates are molded bodies of plastics or glass.

5. A device according to any of the Claims 1 to 4, wherein the depth of the groove section defined between the two substrates is by 2 to 300 $\mu$m greater than the thickness of the polymer film.

6. A device according to any of the Claims 1 to 5, wherein the groove is formed integrally with the substrate.

7. A device according to any of the Claims 1 to 6, wherein the substrate having the groove is formed by uniting a planar molded body and spacers.

8. A device according to any of the Claims 1 to 7, wherein the bonding agent is selected from the group consisting of an epoxy resin bonding agent and an UV-curing resin bonding agent.

9. A device according to any of the Claims 1 to 7, wherein the bonding agent is an UV-curing resin bonding agent.

FIG. 1B

FIG. 1A

FIG. 1C

FIG. 2

# FIG. 3A
## PRIOR ART

# FIG. 3B
## PRIOR ART

# FIG. 3C
## PRIOR ART